# EUROPÄISCHE PATENTSCHRIFT

(11) **EP 3 533 119 B1**
(45) Veröffentlichungstag und Bekanntmachung des Hinweises auf die Patenterteilung: **02.11.2022**
(21) Anmeldenummer: 17751314.0
(22) Anmeldetag: 27.07.2017
(51) Int. Cl.: H02G 1/12

(54) **VORRICHTUNG FÜR DIE KONFEKTIONIERUNG VON MANTELLEITUNGEN**
APPARATUS FOR MANUFACTURING SHEATHED CABLES
DISPOSITIF POUR LA CONFECTION DE CONDUCTEURS SOUS GAINE

(30) Priorität: 25.10.2016 DE 202016105999 U
(43) Veröffentlichungstag der Anmeldung: 04.09.2019
(73) Patentinhaber: LEONI Bordnetz-Systeme GmbH, 97318 Kitzingen (DE); Komax Holding AG, 6036 Dierikon (CH)
(72) Erfinder: DANTZ, Dirk, 97318 Kitzingen (DE); JEDAMSKI, Jens, 97080 Würzburg (DE)
(74) Vertreter: FDST Patentanwälte
(86) Internationale Anmeldenummer: PCT/EP2017/069007
(87) Internationale Veröffentlichungsnummer: WO 2018/077498

(56) Entgegenhaltungen:
- EP-A1- 1 231 692
- EP-A1- 1 424 757
- EP-A1- 2 511 213
- EP-A2- 1 258 960
- WO-A1-98/57399
- WO-A1-2009/062982
- DE-A1- 4 026 989
- KR-B1- 101 368 947

## Beschreibung

Die Erfindung betrifft eine Vorrichtung sowie deren Verwendung für die Konfektionierung von Mantelleitungen mit einem Außenmantel, insbesondere von geschirmten Silikon-Mantelleitungen, aufweisend eine Schneideinheit mit einer Schneide zum Anschneiden eines Außenmantels einer Mantelleitung.

Solche Vorrichtungen für die Konfektionierung von Mantelleitungen mit einem Außenmantel sind dem Fachmann prinzipiell bekannt und beispielsweise in der EP 1 424 757 A1 oder der EP 1 231 692 A1 beschrieben. Aus diesen Dokumenten sind jeweils Schneideinheiten zu entnehmen, die zwei gegeneinander verfahrbare Trenn- und Abisoliermesser aufweisen.

Aus der WO 2009/062982 A1 ist eine weitere Vorrichtung zum Trennen und Abisolieren von elektrischen Kabeln zu entnehmen, die zum Zentrieren des Kabels eine Zentriereinheit mit gegeneinander verstellbaren Zentrierplatten aufweist.

Aus der EP 1 258 960 A2 ist eine Vorrichtung zum Abisolieren von Kabeln zu entnehmen, die zwei gegeneinander verschiebbare Schneidplatten aufweist. Jede der Schneidplatten weist ein Durchgangsloch für das Kabel auf, welches an gegenüberliegenden Randbereichen jeweils eine Schneide aufweist.

Aus der WO 98/57399 A1 sowie der DE 40 26 989 A1 sind jeweils Vorrichtungen zu entnehmen, mit deren Hilfe der Isoliermantel einer Einzelleitung an zwei gegenüberliegenden Seiten teilweise abgeschert wird, so dass der Isoliermantel abgeflacht wird.

Mantelleitungen werden typischerweise für eine Zwischenlagerung oder einen Transport auf Kabeltrommeln oder Bobinen aufgewickelt. Für eine Weiterverarbeitung, beispielsweise eine Konfektionierung, werden die Mantelleitungen dann wieder von den Kabeltrommeln bzw. Bobinen abgewickelt und hierbei häufig in Segmente zerteilt, aus denen beispielsweise Kabelsätze hergestellt werden.

Problematisch ist dabei, dass der Querschnitt einer auf eine Kabeltrommel aufgewickelten Mantelleitung, zumindest bei Mantelleitungen mit größerem Durchmesser, durch das Eigengewicht der Mantelleitung verformt wird, also beispielsweise von einem runden Querschnitt hin zu einem eher elliptischen Querschnitt. Eine entsprechende Querschnittsveränderung führt jedoch zu Problemen bei der Weiterverarbeitung entsprechender Mantelleitungen und insbesondere bei der Konfektionierung.

Ausgehend hiervon liegt der Erfindung die Aufgabe zugrunde, eine vorteilhafte Möglichkeit für das Konfektionieren von Mantelleitungen anzugeben.

Diese Aufgabe wird erfindungsgemäß gelöst durch eine Vorrichtung mit den Merkmalen des Anspruchs 1 sowie durch die Verwendung einer solchen Vorrichtung mit den Merkmalen des Anspruchs 9. Bevorzugte Weiterbildungen sind in den rückbezogenen Ansprüchen enthalten.

Hierbei ist die Vorrichtung für eine Konfektionierung von Mantelleitungen mit einem Außenmantel, vorzugsweise von Mantelleitungen mit einem Außenmantel sowie einer darunter liegenden Schirmlage sowie insbesondere von geschirmten Silikon-Mantelleitungen, ausgebildet und bevorzugt für sogenannte Hochvolt-Leitungen für den Fahrzeugbereich ausgelegt. Im Rahmen der vorgesehenen Konfektionierung erfolgt dabei die Zerteilung einer Mantelleitung in Segmente und/oder eine abschnittsweise Abisolierung der Mantelleitung oder der Mantelleitungssegmente, wobei die Vorrichtung hierfür eine Schneideinheit mit zumindest einer Schneide, welche insbesondere V-förmig, bogenförmig oder kreisbogenförmig ausgestaltet ist, zum Anschneiden des Außenmantels der Mantelleitung aufweist. Zudem ist ein Formgebungselement mit einer Formfläche Teil der Vorrichtung, mit der der Mantelleitung in zumindest einem Abschnitt für das Anschneiden des Außenmantels eine durch die Formfläche bestimmte Querschnittsform aufgeprägt wird.

Durch den Einsatz des Formgebungselements wird die Mantelleitung im entsprechenden Abschnitt in eine für das Anschneiden günstige Form gebracht. Die mittels des Formgebungselements aufgeprägte Querschnittsform entspricht dabei bevorzugt der ursprünglich angedachten Querschnittsform für die Mantelleitung und dementsprechend macht das Formgebungselement bevorzugt lediglich unerwünschte Verformungen rückgängig, die beispielsweise durch die eingangs beschriebene Problematik hervorgerufen werden. Ist die Vorrichtung dabei für Mantelleitungen mit einem Außenmantel und einer darunterliegenden Schirmlage ausgebildet, so wird durch das Formgebungselement und die Aufprägung einer vorgesehenen Querschnittsform sichergestellt, dass lediglich der Außenmantel beispielsweise für eine Abisolierung angeschnitten wird, ohne dass dabei die darunterliegende Schirmlage verletzt wird.

Da für Mantelleitungen ein runder Querschnitt vorgesehen ist, ist die Formfläche des Formgebungselements in den meisten Fällen als Zylindermantelfläche ausgebildet, und dementsprechend wird dann mit einem solchen Formgebungselement der Mantelleitung in den zumindest einen Abschnitt eine runde Querschnittsform aufgeprägt.

Weiter weist das Formgebungselement zwei Halbschalen auf, die einander ergänzen und zur Aufprägung der durch die Formfläche bestimmten Querschnittsformen bei einliegender Mantelleitung gegeneinandergepresst werden. Ein derartiges Formgebungselement lässt sich relativ einfach realisieren, wodurch die Herstellungskosten überschaubar bleiben.

Da die Aufprägung der Querschnittsform durch das Formgebungselement den Schneidprozess, also das Anschneiden des Außenmantels einer Mantelleitung günstig beeinflussen soll, ist es weiter zweckdienlich, wenn das Formgebungselement und die Schneide oder Schneideinheit in räumlicher Nähe zueinander angeordnet sind, da sich auf diese Weise typischerweise problemlos sicherstellen lässt, dass die vorgestimmte und mit Hilfe des Formgebungselements aufgeprägte Querschnittsform für das Anschneidens des Außenmantels in dem Bereich, in dem das Anschneiden erfolgt, fixiert ist.

Eine entsprechende räumliche Nähe ist dabei vorteilhafterweise dadurch realisiert, dass die Schneideinheit das Formgebungselement aufweist.

In vorteilhafter Weiterbildung ist dann die Schneideinheit durch zwei Halbschalen, auch Schneidmesser genannt, ausgebildet oder weist zumindest zwei Halbschalen auf, wobei jede Halbschale zumindest eine Schneide und zumindest eine Teil-Formfläche des Formgebungselements aufweist. Die entsprechenden Halbschalen sind dann in der Vorrichtung für die Konfektionierung von Mantelleitungen typischerweise einander gegenüberliegend angeordnet und werden für ein Anschneiden eines Außenmantels einer Mantelleitung aufeinander zubewegt und gegeneinandergepresst.

Günstig ist hierbei insbesondere eine Ausgestaltung der Halbschalen, bei denen sich die Teil-Formfläche einer Halbschale unmittelbar an die Schneide der entsprechenden Halbschale anschließt.

In vorteilhafter Weiterbildung ist dann die Schneide einer Halbschale innerhalb der Teil-Formfläche der zugehörigen Halbschale angeordnet oder aber die Schneide ist von Teil-Formflächen der zugehörigen Halbschale eingerahmt.

Darüber hinaus ist die Vorrichtung vorteilhafterweise derart ausgebildet, dass diese nach Art eines Doppelklingencutters arbeitet, wobei die zwei Schneiden, die insbesondere V-förmig, bogenförmig oder kreisbogenförmig ausgestaltet sind, quasi in einer Cut-Ebene einander gegenüberliegend positioniert und für einen Schneidprozess innerhalb dieser Cut-Ebene in einer Arbeitsrichtung linear aufeinander zu und voneinander weg bewegbar sind. Dabei erstrecken sich quer zur Cut-Ebene und quer Arbeitsrichtung beidseitig jeder Schneide die Teil-Formflächen des Formgebungselements, die zusammen eine Zylindermantelform ausbilden.

Zudem ist die Vorrichtung vorzugsweise nicht für die Konfektionierung unterschiedlicher Mantelleitungen ausgebildet, sondern lediglich für die Konfektionierung von Mantelleitungen genau eines vorgegebenen Typs oder einer vorgegebenen Konfiguration mit vorgegebenem Aufbau und insbesondere mit vorgegebenem Durchmesser, wobei eine entsprechende Mantelleitung einem Außenmantel und eine darunterliegende Schirmlage aufweist. Dabei ist dann durch die konstruktive Ausgestaltung der Vorrichtung und insbesondere der Schneideinheit sichergestellt, dass lediglich der Außenmantel beispielsweise für eine Abisolierung angeschnitten oder durchschnitten wird, ohne dass dabei die darunterliegende Schirmlage verletzt wird. Hierzu ist die Schneideinheit bevorzugt als nach Art eines Doppelklingencutters ausgestaltet und weist zwei Halbschalen auf, wobei jede Halbschale zumindest eine Schneide und zumindest eine Teil-Formfläche des Formgebungselements aufweist. In der Vorrichtung sind diese beiden Halbschalen dann für die Konfektionierung von Mantelleitungen typischerweise einander gegenüberliegend angeordnet und werden für ein Anschneiden eines Außenmantels einer Mantelleitung aufeinander zubewegt, bis die beiden Halbschalen stirnseitig aneinander anliegen. In diesem Zustand ist dann der minimale Abstand der Schneiden der beiden Halbschalen zueinander gegeben und somit auch die maximale Tiefe der Einschnitte in eine einliegende Mantelleitung. Die geometrische Ausgestaltung der beiden Halbschalen ist daher insbesondere an den Durchmesser der zu konfektionierenden Mantelleitungen angepasst sowie an die Wandstärke des Außenmantels der entsprechenden Mantelleitungen. Dabei erstrecken sich weiter bevorzugt quer zur Cut-Ebene, quasi in Längsrichtung einer einliegenden Mantelleitung, beidseitig jeder Schneide Teil-Formflächen des Formgebungselements, die zusammen eine Zylindermantelform ausbilden. Jene Zylindermantelform weist dabei zweckdienlicherweise einen Durchmesser auf, der dem für die Mantelleitungen des vorgegebenen Typs vorgesehenen Durchmesser entspricht, also beispielsweise 14,4 mm. Typisch sind hierbei Zylindermantelformen mit einem Durchmesser, der im Bereich 5 mm und 30 mm und insbesondere im Bereich 12 mm und 18 mm liegt. Die Länge einer solchen Zylindermantelform weist hierbei bevorzugt einen Wert auf, der im Bereich 10 mm und 40 mm und insbesondere im Bereich 10 mm und 20 mm liegt, also beispielsweise 14 mm entspricht.

Ausführungsbeispiele der Erfindung werden nachfolgend anhand einer schematischen Zeichnung näher erläutert. Darin zeigen:
- FIG 1: in einer perspektivischen Ansicht eine Vorrichtung für die Konfektion von Mantelleitungen mit einer Schneideinheit aus zwei Halbschalen,
- FIG 2: in einer ersten perspektivischen Ansicht die beiden Halbschalen,

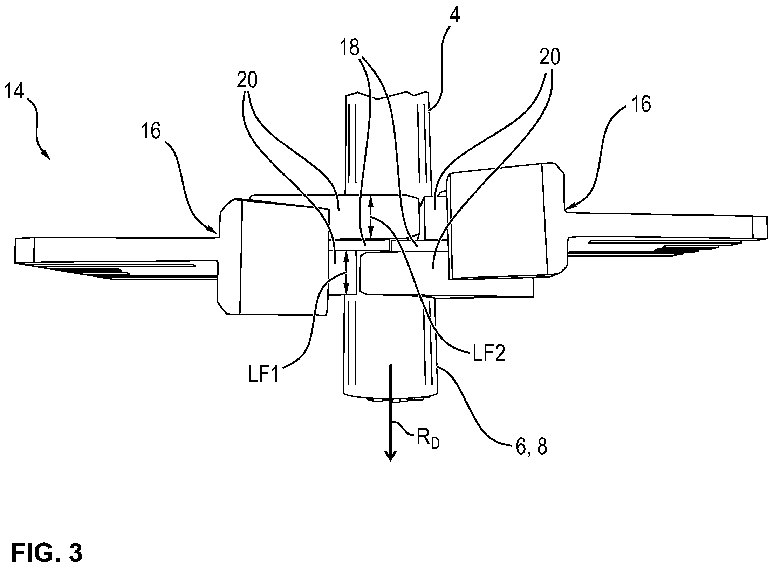

- FIG 3: in einer zweiten perspektivischen Ansicht die beiden Halbschalen zusammen mit einem Stück einer Mantelleitung,

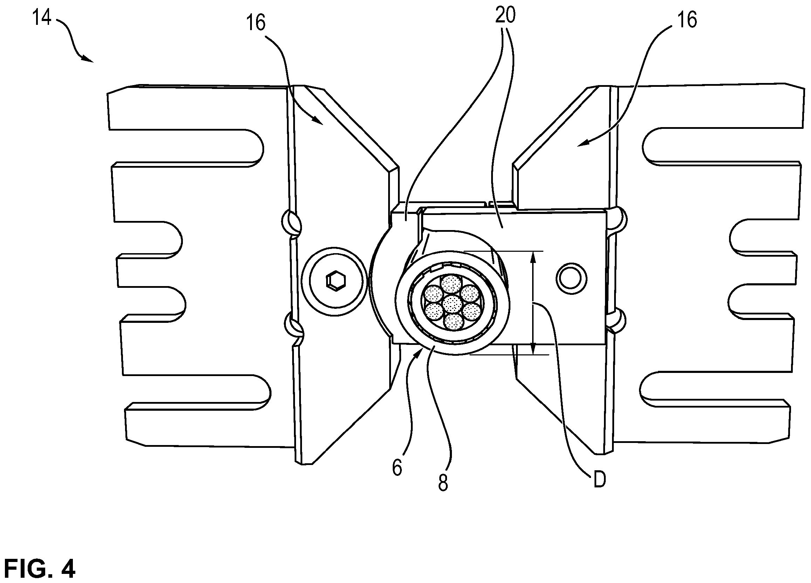

- FIG 4: in einer dritten perspektivischen Ansicht die beiden Halbschalen zusammen mit dem Stück der Mantelleitung,

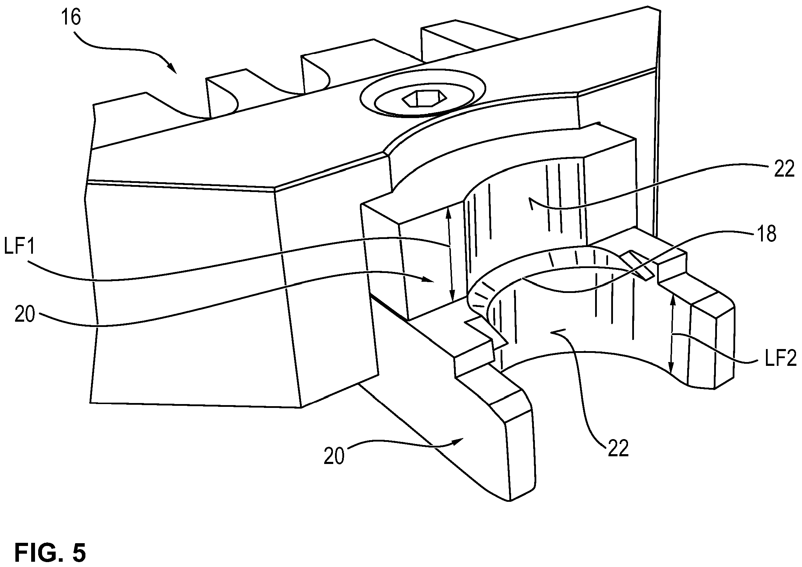

- FIG 5: in einer vierten perspektivischen Ansicht eine der beiden Halbschalen sowie

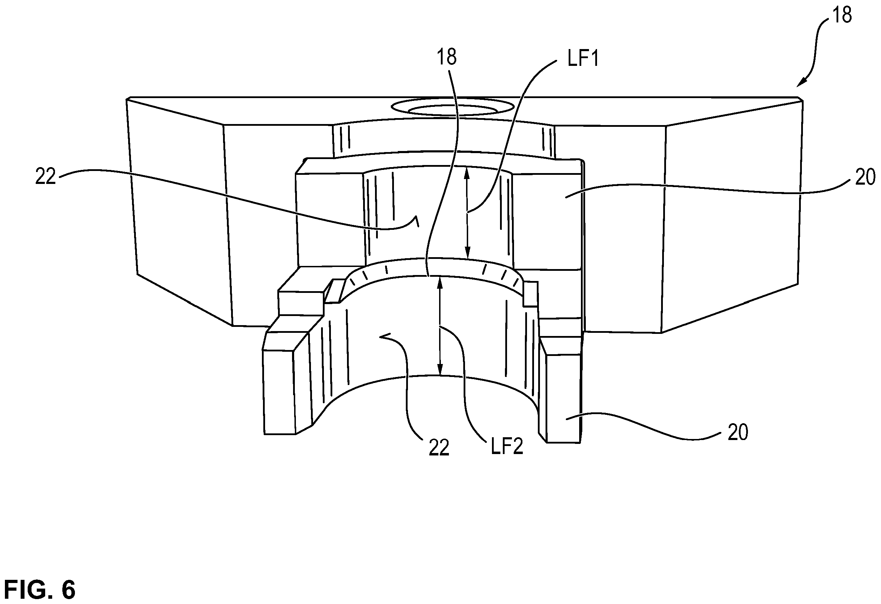

- FIG 6: in einer fünften perspektivischen Ansicht eine der beiden Halbschalen.

Einander entsprechende Teile sind in allen Figuren jeweils mit den gleichen Bezugszeichen versehen.

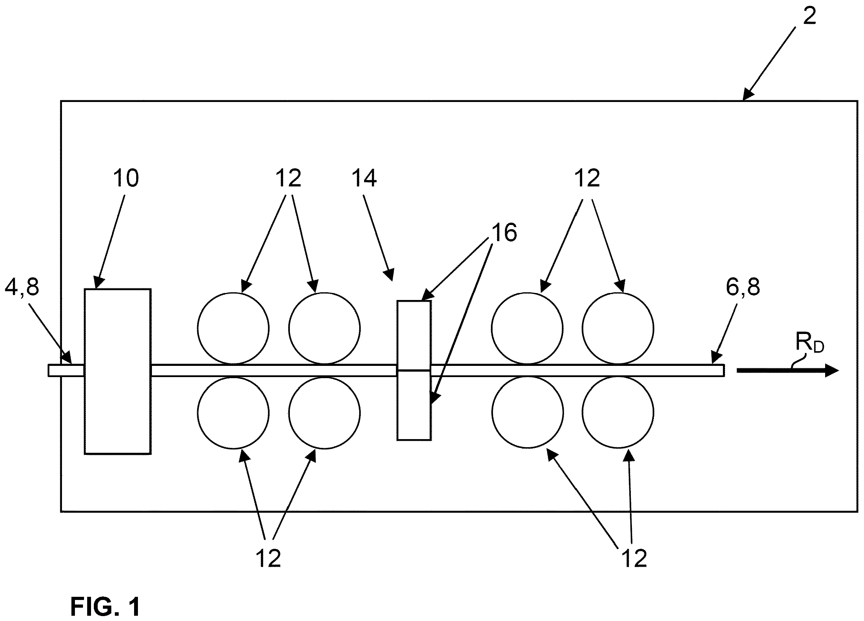

Eine nachfolgend exemplarisch beschriebene und in Fig. 1 nach Art eines Blockschaltbildes dargestellte Vorrichtung 2 ist für die Konfektionierung von Mantelleitungen 4 eines vorgegebenen Typs mit vorgegebenem Aufbau ausgebildet, wobei die entsprechenden Mantelleitungen 4 typischerweise als auf Kabeltrommeln aufgewickelte Mantelleitungen 4 zur Verfügung stehen und für die Konfektionierung nach und nach abgewickelt werden. Die Konfektionierung umfasst dabei im Ausführungsbeispiel das Zerteilen einer Mantelleitung 4 in Segmente 6 sowie das endseitige Anschneiden des Außenmantels 8 der Mantelleitung 4 für ein Abisolieren der Enden der Segmente 6.

Hierfür wird zunächst ein Ende der Mantelleitung 4 quasi in die Vorrichtung 2 eingefädelt, sodass das entsprechende Ende der Mantelleitung 4 mittels eines Führungselements 10 geführt ist und zwischen Transportwalzen 12 einliegt. Nachfolgend wird ein automatisierter Konfektionierungsprozess gestartet, so dass die Mantelleitung 4 mithilfe der Transportwalzen 12 in einer Durchlaufrichtung R_{D} nach und nach einer Schneideinheit 14 zugeführt wird, wo die Mantelleitung 4 in Segment 6 zerteilt wird und wo die Segmente 6 endseitig für eine Abisolierung angeschnitten werden.

Hierzu erfolgt an der Schneideinheit 14 in einer sich wiederholenden Abfolge ein Durchtrennen der Mantelleitung 4, ein Anschneiden des Außenmantels 8, ein weiteren Anschneiden des Außenmantels 8 und ein weiteres Durchtrennen der Mantelleitung 4, wobei zwischen jedem dieser Arbeitsschritte oder Schneidprozesse die Mantelleitung 4 mittels der Transportwalzen 12 in Durchlaufrichtung R_{D} ein Stück weit vorwärts bewegt wird.

Das Anschneiden des Außenmantels 8 erfolgt hierbei im Ausführungsbeispiel mithilfe einer Schneideinheit 14. Diese ist aus zwei austauschbaren Halbschalen 16 ausgebildet, die in der Vorrichtung 2 einander gegenüberliegend angeordnet sind und für ein Anschneiden aufeinander zubewegt werden und schließlich zusammengepresst werden, bis diese stirnseitig aneinanderstoßen. Die Schneideinheit 14 ist somit nach Art eines Doppelklingencutters ausgebildet, wobei jede Halbschale 16 eine Schneide 18 aufweist.

Darüber hinaus weist die Vorrichtung 2 ein Formgebungselement 20 mit einer Formfläche 22 auf, mit dem der Mantelleitung 4 in zumindest einem Abschnitt für das Anschneiden des Außenmantels 8 eine durch die Formfläche 22 bestimmte Querschnittsform aufgeprägt wird. Im Ausführungsbeispiel ist das Formgebungselement 20 dabei in die Schneideinheit 14 integriert und dementsprechend weist jede Halbschale 16 der Schneideinheit 14 zusätzlich zur Schneide 18 eine Teil-Formfläche, also einen Teil der Formfläche 22 auf. Die Formfläche 22 entspricht im Ausführungsbeispiel einer Zylindermantelfläche und dementsprechend ist das Formgebungselement 20 im Ausführungsbeispiel ausgebildet, um der Mantelleitung 4 in zumindest einem Abschnitt eine runde Querschnittsform aufzuprägen. Der Durchmesser D der Zylindermantelfläche entspricht hierbei dem vorgesehenen Durchmesser der Mantelleitung 4.

Damit dient das Formgebungselement 20 vor Allem dazu, Verformungen an der Mantelleitung 4 rückgängig zu machen, die beispielsweise während einer Zwischenlagerung oder einem Transport aufgetreten sind. Das Formgebungselement 20 stellt somit zumindest in dem Bereich, in dem der Außenmantel 8 angeschnitten wird, die ursprünglich vorgegebene und vorgesehene runde Querschnittsform der Mantelleitung 4 wieder her, wodurch der Schneidprozess, insbesondere das Anschneiden des Außenmantels 8, besser reproduzierbar wird und eben nicht mehr von der tatsächlichen Querschnittsform der Mantelleitung 4 abhängt.

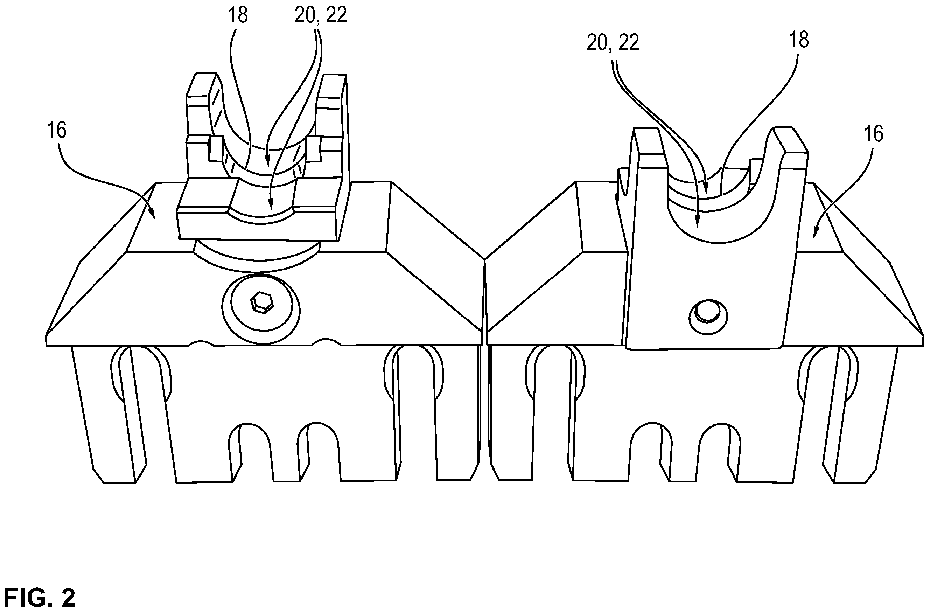

Eine detailliertere Darstellung der beiden Halbschalen 16 der Schneideinheit 14 ist in Fig. 2 wiedergegeben. Daraus ist zu entnehmen, dass jede Halbschale 16 als austauschbare, mehrteilige Halbschale 16 ausgebildet ist und einen Träger aufweist. An jedem Träger sind im Ausführungsbeispiel drei Funktionsbausteine jeweils lösbar, beispielsweise gemeinsam mittels einer einzigen Schraube, befestigt, wobei ein Funktionsbaustein die Schneide 18 der entsprechenden Halbschale 16 aufweist. Die anderen beiden Funktionsbausteine weisen je eine Teil-Formfläche mit vorgegebener Länge LF1, LF2, also einen Teil der Formfläche 22, auf und rahmen den Funktionsbaustein mit der Schneide 18 ein. Den Funktionsbausteinen gegenüberliegend weist jeder Träger eine Befestigungseinrichtung auf, mittels derer sich die Halbschale 16 in der Vorrichtung 2 fixieren lässt. Jene Befestigungseinrichtung ist im Ausführungsbeispiel durch eine kammartige Geometrie ausgebildet.

Als Folge dieser Ausgestaltung ist die Schneide 18 einer jeden Halbschale 16 im Ausführungsbeispiel quasi innerhalb der Teil-Formflächen der entsprechenden Halbschale 16 angeordnet oder, anders ausgedrückt, sind die Schneiden 18 der beiden Halbschalen 16 jeweils von Teil-Formflächen eingerahmt, sodass sich unmittelbar an jede Schneide 18 Teil-Formflächen beidseitig anschließen. Jene Teil-Formflächen bilden dabei zusammen eine Zylindermantelform aus, die der Mantelleitung 4 wie bei einer Formpresse außenseitig aufgeprägt wird.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Vorrichtung
- 4: Mantelleitung
- 6: Segment
- 8: Außenmantel
- 10: Führungselement
- 12: Transportwalze
- 14: Schneideinheit
- 16: Halbschale
- 18: Schneide
- 20: Formgebungselement
- 22: Formfläche

- R_{D}: Durchlaufrichtung

- D: Durchmesser Mantelleitung
- LF1: Länge der Formfläche des Formgebungselements 1
- LF2: Länge der Formfläche des Formgebungselements 2

## Patentansprüche

1. Vorrichtung (2) für die Konfektionierung von Mantelleitungen (2) mit einem Außenmantel (8), wobei die Mantelleitungen (2) einen runden Querschnitt aufweisen, aufweisend eine Schneideinheit (14) mit zumindest einer Schneide (18) zum Anschneiden des Außenmantels (8) einer jeweiligen Mantelleitung (4) und ein Formgebungselement (20) mit einer Formfläche (22), welche der Mantelleitung (4) in zumindest einem Abschnitt für das Anschneiden des Außenmantels (8) eine durch die Formfläche (22) bestimmte Querschnittsform aufprägt, **dadurch gekennzeichnet, dass** die mittels des Formgebungselements (20) aufgeprägte Querschnittsform einer ursprünglichen Querschnittsform der Mantelleitung (4) entspricht und wobei das Formgebungselement (20) zwei Halbschalen (16) mit je einer Teil-Formfläche aufweist, die zur Aufprägung der durch die Formfläche (22) bestimmten Querschnittsform bei einliegender Mantelleitung (4) gegeneinander gepresst werden.

2. Vorrichtung (2) nach Anspruch 1,
**dadurch gekennzeichnet,**
**dass** die Formfläche (22) als Zylindermantelfläche ausgebildet ist, so dass das Formgebungselement (20) der Mantelleitung (4) in dem zumindest einen Abschnitt eine runde Querschnittsform aufprägt.

3. Vorrichtung (2) nach Anspruch 1 oder 2,
**dadurch gekennzeichnet,**
**dass** das Formgebungselement (20) im Nahbereich der zumindest einen Schneide (18) angeordnet ist.

4. Vorrichtung (2) nach einem der Ansprüche 1 bis 3,
**dadurch gekennzeichnet,**
**dass** die Schneideinheit (14) das Formgebungselement (20) aufweist.

5. Vorrichtung (2) nach einem der Ansprüche 1 bis 4,
**dadurch gekennzeichnet,**
**dass** die Schneideinheit (14) zwei Halbschalen (16) aufweist, wobei jede Halbschale (16) eine Schneide (18) und eine Teil- Formfläche des Formgebungselements (20) aufweist.

6. Vorrichtung (2) nach Anspruch 5,
**dadurch gekennzeichnet,**
**dass** sich die Teil-Formfläche unmittelbar an die Schneide (18) anschließt.

7. Vorrichtung (2) nach Anspruch 5,
**dadurch gekennzeichnet,**
**dass** die Schneide (18) innerhalb der Teil-Formfläche angeordnet ist.

8. Vorrichtung (2) nach Anspruch 5,
**dadurch gekennzeichnet,**
**dass** die Schneideinheit (14) derart konstruktiv ausgestaltet ist, dass die zwei Halbschalen (16) für die Konfektionierung einander gegenüberliegend angeordnet sind und für ein Anschneiden des Außenmantels (8) der Mantelleitung (2) aufeinander zubewegbar sind, bis die beiden Halbschalen (16) stirnseitig aneinander zum Anliegen kommen, wobei in diesem Zustand ein minimaler Abstand der Schneiden (18) der beiden Halbschalen (16) zueinander gegeben ist.

9. Verwendung der Vorrichtung nach einem der vorhergehenden Ansprüche zur Konfektionierung von Mantelleitungen (2) mit einem Außenmantel (8), wobei die Vorrichtung eine Schneideinheit (14) mit zumindest einer Schneide (18) zum Anschneiden des Außenmantels (8) der jeweiligen Mantelleitung (4) aufweist
**gekennzeichnet durch**
ein Formgebungselement (20) mit einer Formfläche (22), welche der Mantelleitung (4) in zumindest einem Abschnitt für das Anschneiden des Außenmantels (8) eine durch die Formfläche (22) bestimmte Querschnittsform aufprägt, wobei die mittels des Formgebungselements (20) aufgeprägte Querschnittsform einer ursprünglichen Querschnittsform der Mantelleitung (4) entspricht und wobei das Formgebungselement (20) zwei Halbschalen (16) mit je einer Teil-Formfläche aufweist, die zur Aufprägung der durch die Formfläche (22) bestimmten Querschnittsform bei einliegender Mantelleitung (4) gegeneinandergepresst werden.

10. Verwendung nach Anspruch 9,
**dadurch gekennzeichnet,**
**dass** die Schneideinheit (14) zwei Halbschalen (16) aufweist, wobei jede Halbschale (16) eine Schneide (18) und eine Teil- Formfläche des Formgebungselements (20) aufweist und die zwei Halbschalen (16) der Schneideinheit (14) für die Konfektionierung einander gegenüberliegend angeordnet sind und für ein Anschneiden des Außenmantels (8) der Mantelleitung (2) aufeinander zubewegt werden, bis die beiden Halbschalen (16) stirnseitig aneinander anliegen, wobei in diesem Zustand der minimale Abstand der Schneiden (18) der beiden Halbschalen (16) zueinander gegeben ist.

## Claims

1. Device (2) for the configuration of sheathed cables (2) with an outer sheath (8), wherein the sheathed cables (2) having a round cross-section, comprising a cutting unit (14) with at least one cutting edge (18) for cutting the outer sheath (8) of a respective sheathed cable (4) and a shaping element (20) with a shaping surface (22), which imprints a cross-sectional shape determined by the shaping surface (22) on the sheathed cable (4) in at least one section for cutting the outer sheath (8),
**characterized in that**
the cross-sectional shape imprinted by means of the shaping element (20) corresponds to the initial cross-sectional shape of the sheathed cable (4) and wherein the shaping element (20) has two half-shells (16), each with a partial shaping surface, which are pressed against each other to imprint the cross-sectional shape determined by the shaping surface (22) when the sheathed cable (4) is inserted.

2. Device (2) according to claim 1,
**characterized in**
**that** the shaping surface (22) is designed as a cylindrical surface, so that the shaping element (20) imprints a round cross-sectional shape on the sheathed cable (4) in the at least one section.

3. Device (2) according to claim 1 or 2,
**characterized in**
**that** the shaping element (20) is arranged in the vicinity of the at least one cutting edge (18).

4. Device (2) according to one of claims 1 to 3,
**characterized in**
**that** the cutting unit (14) comprises the shaping element (20).

5. Device (2) according to one of claims 1 to 4,
**characterized in**
**that** the cutting unit (14) comprises two half-shells (16), wherein each half-shell (16) comprises a cutting edge (18) and a partial shaping surface of the shaping element (20).

6. Device (2) according to claim 5,
**characterized in**
**that** the partial shaping surface directly adjoins the cutting edge (18).

7. Device (2) according to claim 5,
**characterized in**
**that** the cutting edge (18) is arranged within the partial shaping surface.

8. Device (2) according to claim 5,
**characterized in**
**that** the cutting unit (14) is designed in such a way that the two half-shells (16) are arranged opposite each other for the configuration and can be moved towards each other for cutting the outer sheath (8) of the sheathed cable (2) until the two half-shells (16) come into contact with each other at the end face, wherein in this state there is a minimum distance between the cutting edges (18) of the two half-shells (16).

9. Use of the device according to one of the preceding claims for configuring sheathed cables (2) with an outer sheath (8), wherein the device comprises a cutting unit (14) with at least one cutting edge (18) for cutting the outer sheath (8) of the respective sheathed cable (4)
**characterized by**
a shaping element (20) with a shaping surface (22), which imprints a cross-sectional shape determined by the shaping surface (22) on the sheathed cable (4) in at least one section for cutting the outer sheath (8), wherein the cross-sectional shape imprinted by means of the shaping element (20) and wherein corresponds to the initial cross-sectional shape of the sheathed cable (4) the shaping element (20) has two half-shells (16), each with of a partial shaping surface, which are pressed against each other to imprint the cross-sectional shape determined by the shaping surface (22) when the sheathed cable (4) is inserted.

10. Use according to claim 9,
**characterized in**
**that** the cutting unit (14) has two half-shells (16), each half-shell (16) having a cutting edge (18) and a partial shaping surface of the shaping element (20), and the two half-shells (16) of the cutting unit (14) being arranged opposite each another for making up and being moved towards each another for cutting the outer sheath (8) of the sheathed cable (2), until the two half-shells (16) bear against each another at the end faces, wherein the minimum distance between the cutting edges (18) of the two half-shells (16) is given in this state.

## Revendications

1. Dispositif (2) pour la confection de câbles sous gaine (2) avec une gaine extérieure (8), dans lequel les câbles sous gaine (2) comprennent une section transversale ronde, comprenant une unité de coupe (14) avec au moins un tranchant (18) pour découper la gaine extérieure (8) d'un câble sous gaine (4) respectif et un élément de mise en forme (20) avec une surface de formage (22), qui imprime à la conduite sous gaine (4), dans au moins une section pour le découpage de la gaine extérieure (8), une forme de section transversale déterminée par la surface de formage (22),
**caractérisé en ce que**
la forme de la section transversale imprimée au moyen de l'élément de mise en forme (20) correspond à une forme de section transversale initiale du câble sous gaine (4) et l'élément de mise en forme (20) comprenant deux demi-coques (16) avec chacune une surface de formage partielle, qui sont pressées l'une contre l'autre pour imprimer la forme de la section transversale déterminée par la surface de formage (22) lorsque le câble sous gaine (4) est inséré.

2. Dispositif (2) selon la revendication 1,
**caractérisé en ce**
**que** la surface de formage (22) est conçue comme une surface d'enveloppe cylindrique, de sorte que l'élément de mise en forme (20) imprime au câble sous gaine (4) une forme de section transversale ronde dans la au moins une section.

3. Dispositif (2) selon la revendication 1 ou 2,
**caractérisé en ce**
**que** l'élément de mise en forme (20) est disposé à proximité de l'au moins un tranchant (18).

4. Dispositif (2) selon l'une des revendications 1 à 3,
**caractérisé en ce**
**que** l'unité de coupe (14) comporte l'élément de mise en forme (20).

5. Dispositif (2) selon l'une des revendications 1 à 4,
**caractérisé en ce**
**que** l'unité de coupe (14) comprend deux demi-coquilles (16), chaque demicoquille (16) comprenant un tranchant (18) et une surface de formage partielle de l'élément de conformation (20).

6. Dispositif (2) selon la revendication 5,
**caractérisé en ce**
**que** la surface de formage partielle se raccorde directement au tranchant (18).

7. Dispositif (2) selon la revendication 5,
**caractérisé en ce**
**que** le tranchant (18) est disposé à l'intérieur de la surface de formage partielle.

8. Dispositif (2) selon la revendication 5,
**caractérisé en ce**
**que** l'unité de coupe (14) est conçue de telle sorte que les deux demi-coques (16) sont disposées l'une en face de l'autre pour la confection et peuvent être déplacées l'une vers l'autre pour une coupe de la gaine extérieure (8) du câble sous gaine (2) jusqu'à ce que les deux demi-coques (16) viennent s'appliquer l'une contre l'autre du côté frontal, un écart minimal entre les tranchants (18) des deux demi-coques (16) étant donné dans cet état.

9. Utilisation du dispositif selon l'une des revendications précédentes pour la confection de câbles sous gaine (2) avec une gaine extérieure (8), le dispositif comprenant une unité de coupe (14) avec au moins un tranchant (18) pour couper la gaine extérieure (8) du câble sous gaine (4) correspondant
**caractérisée par**
un élément de mise en forme (20) avec une surface de formage (22), qui imprime à la conduite sous gaine (4), dans au moins une section pour le découpage de la gaine extérieure (8), une forme de section transversale déterminée par la surface de formage (22), la forme de la section transversale imprimée au moyen de l'élément de mise en forme (20) correspondant à une forme initiale de la section transversale du câble sous gaine (4) et l'élément de mise en forme (20) comprenant deux demi-coques (16) avec chacune une surface de formage partielle, qui sont pressées l'une contre l'autre pour imprimer la forme de la section transversale déterminée par la surface de formage (22) lorsque le câble sous gaine (4) est inséré.

10. Utilisation selon la revendication 9,
**caractérisée en ce**
**que** l'unité de coupe (14) comprend deux demi-coques (16), chaque demicoque (16) comprenant un tranchant (18) et une surface de formage partielle de l'élément de mise en forme (20) et les deux demi-coques (16) de l'unité de coupe (14) étant disposées l'une en face de l'autre pour la confection et étant déplacées l'une vers l'autre pour une coupe de la gaine extérieure (8) du câble sous gaine (2), jusqu'à ce que les deux demi-coquilles (16) soient en contact frontal l'une avec l'autre, la distance minimale entre les tranchants (18) des deux demi-coquilles (16) étant donnée dans cet état.
